# EUROPÄISCHE PATENTSCHRIFT

(11) **EP 0 296 172 B1**
(45) Veröffentlichungstag und Bekanntmachung des Hinweises auf die Patenterteilung: **29.12.1993**
(21) Anmeldenummer: 87902023.8
(22) Anmeldetag: 12.03.1987
(51) Int. Cl.: G06K 19/08, G07F 7/08, G07F 7/02

(54) **FÄLSCHUNGSGESICHERTER DATENTRÄGER UND VORRICHTUNG ZUR BEHANDLUNG, BEARBEITUNG UND KONTROLLE DES DATENTRÄGERS**
DATA SUPPORT PROTECTED AGAINST FALSIFICATION AND DEVICE FOR HANDLING,PROCESSING AND INSPECTING THE DATA SUPPORT
SUPPORT DE DONNEES ASSURE CONTRE LES FALSIFICATIONS ET DISPOSITIF POUR LE TRAITEMENT, LE FACONNAGE ET LE CONTROLE DU SUPPORT DE DONNEES

(30) Priorität: 12.03.1986 AT 644/86; 12.03.1986 AT 645/86; 12.03.1986 AT 646/86; 12.03.1986 AT 647/86; 12.03.1986 AT 648/86
(43) Veröffentlichungstag der Anmeldung: 28.12.1988
(60) Teilanmeldung: 93101790.9
(73) Patentinhaber: SKIDATA COMPUTER GESELLSCHAFT m.b.H., A-5083 Gartenau (AT)
(72) Erfinder: KOCZNAR, Wolfram, A-6020 Innsbruck (AT); WALLERSTORFER, Kurt, A-5204 Strasswalchen (AT)
(74) Vertreter: Hofinger, Engelbert, DDr.
(86) Internationale Anmeldenummer: AT8700017
(87) Internationale Veröffentlichungsnummer: WO8705728

(56) Entgegenhaltungen:
- EP-A- 0 172 584
- DE-A- 2 745 632
- DE-A- 3 303 672
- FR-A- 2 492 213
- FR-A-24 783 49
- GB-A- 2 157 866
- US-A- 4 218 674
- US-A- 4 293 863
- US-A- 4 480 181
- IBM Technical Disclosure Bulletin, Band 20, Nr. 11A, April 1978, (New York, US), R.J. Laybourn: "Mechanical credit card lockout". S. 4563-4564.
- IBM Technical Disclosure Bulletin, Band 27, Nr. 7B, Dezember 1984, (New York, US), G.E. Doody et al.: "Captured badge reader", S. 4314-4315.
- IBM Technical Disclosure Bulletin, Band 20, Nr. 12, Mai 1978, (New York, US), C.J. Sambucetti et al.: "Chemical mist printing", S. 5423-5424.

## Beschreibung

Die Erfindung betrifft eine Vorrichtung zum Lesen und Kennzeichnen von bedruckbaren, kartenförmigen Datenträgern, die eine Magnetschicht aufweisen, mit einem Transportmechanismus zur linearen Bewegung des Datenträgers in einem zwei Flachseiten aufweisenden Kanal, mit einer dem Kanal zugeordneten magnetischen Lese-Kennzeichnungseinrichtung zum Lesen und Beschreiben der Magnetschicht und mit einem Drucker zur visuell lesbaren Kennzeichnung des Datenträgers.

Eine Vorrichtung dieser Art ist der EP-A 172 584 zu entnehmen. Die dort beschriebene Kontroll- und Entwertungsvorrichtung für Karten mit einer Magnetschicht und einer Thermoschicht weist an der einen Seite eines Schlitzes eine elektromagnetische Schreibeinrichtung und Heizelemente auf. An der anderen Seite des Schlitzes sind eine aus Hall-Generatoren bestehende Leseeinrichtung und ebenfalls Heizelemente vorgesehen. Auf den Karten erstreckt sich die Magnetschicht über die gesamte Breite, sodaß die Karte auch mit vertauschten Ober- und Unterseiten eingeführt werden kann. Zum Bedrucken werden jeweils jene Heizelemente eingesetzt, die an der Seite der Thermoschicht liegen. In einer zweiten Ausführung wird nur eine Garnitur Heizelemente entsprechend der Einführlage der Thermoschicht in die benötigte obere oder untere Position geschwenkt. Bei der Verwendung von Thermoschichten können Probleme entstehen, wenn die Karten verschmutzt in die Kartenkontrollvorrichtung eingeführt werden, da dies den Thermodrucker beschädigen kann.

Aus der DE-A 33 03 672 ist eine Einrichtung zum Lesen von kartenförmigen Datenträgern bekannt, auf denen die Daten in asymmetrischer Anordnung etwa auf einem asymmetrischen Magnetstreifen, Strichcode, usw. vorgesehen sind. Um die Karte in der einzig richtigen Lage dem Lesekopf zuzuführen, ist der Leseeinrichtung eine Wendestation zugeordnet, in der die Karte um zwei zueinander senkrechte Achsen gewendet werden kann. Das Wenden der Karte um zwei Achsen erfordert ebenfalls eine relativ große platzraubende Konstruktion, da die erste Wendeeinrichtung in einem Käfig vorgesehen wird, der als Ganzes um die zweite Achse verdreht werden muß.

Für die Prüfung auf Echtheit von Datenträgern sind gemäß der DE-A 27 45 632 auf dem Datenträger zwei teilweise überlappende Magnetschichten aus Materialien mit unterschiedlichen Koerzitivkräften vorgesehen. Der Datenträger wird mit einem löschenden und einem magnetisierenden Feld beaufschlagt. Durch die unterschiedlichen Koerzitivkräfte weist der Datenträger charakterische Eigenschaften auf, die bei einer Echtheitsprüfung überprüft werden können.

Ein weiteres Verfahren für die Echtheitsprüfung beschreibt die US-A 42 18 674. In der Magnetschicht dieses Datenträgers sind magnetische Teilchen, beispielsweise Fasern in einer charakterischen, bekannten Verteilung. Soll die Echtheit überprüft werden, wird die Verteilung der magnetischen Teilchen ermittelt und mit der bekannten Verteilung verglichen.

Die Erfindung hat es sich nun zur Aufgabe gestellt, eine einfache Vorrichtung für die Behandlung, Bearbeitung und Kontrolle eines möglichst fälschungsgesicherten Datenträgers, sowie diesen Datenträger zu schaffen.

Eine derartige Vorrichtung sieht erfindungsgemäß vor, daß als magnetische Lese-Kennzeichnungseinrichtung zumindest ein außermittig angeordneter Lese-Schreibkopf an einer Flachseite des Kanals, und als Drucker ein quer zur Bewegungsrichtung des Datenträgers verfahrbarer Tintenstrahldrucker an der gegenüberliegenden zweiten Flachseite des Kanals vorgesehen ist.

Unter dem Gesichtspunkt der Fälschungssicherheit erscheint der Tintenstrahldruck besonders günstig, da die visuelle Lesbarkeit auch unter erschwerten Umweltbedingungen verbessert wird.

Ein wesentlicher Vorteil eines Tintenstrahldruckers ist auch, daß die Beschriftung kontaktlos erfolgt. Es können daher auf der Oberfläche des Datenträgers befindliche Schmutzpartikel den Druckkopf nicht beschädigen. Dementsprechend weist die erfindungsgemäße Vorrichtung eine sehr hohe Betriebssicherheit auf. Ein weiterer Vorteil ist die Darstellung von grafisch beliebig gestalteten Drucken auf der Oberfläche des Datenträgers.

Ein bevorzugtes Ausführungsbeispiel der Erfindung ist dadurch gekennzeichnet, daß gemeinsam mit dem Tintenstrahldrucker ein optischer Lesekopf verfahrbar angeordnet ist. Dies hat den Vorteil, daß etwaige Betriebsstörungen des Druckers sofort erkannt werden können. Eine Manipulation mit dem Ziel, das Angreifen der Tinte auf der Oberfläche des Datenträgers zu verhindern, wird durch diese Maßnahme wesentlich erschwert.

Bevorzugt ist der optische Lesekopf als Strichcodeleser ausgebildet, sodaß auch optisch bzw. visuell lesbare Kennzeichnungen maschinell gelesen werden können.

Eine weitere bevorzugte Ausführung sieht vor, daß die Lese-Kennzeichnungseinrichtung, jeweils längssymmetrisch, zwei starr befestigte Lese-Schreibköpfe und zwei gegenüberliegende, beweglich gelagerte bzw. elastische Anpreßrollen aufweist.

Durch diese Maßnahme ist es möglich, die Datenträger auch in unterschiedlichen Dicken dann einwandfrei zu lesen, wenn die Karte um 180° in ihrer Ebene verdreht eingeführt wird. Auch eine erhabene Prägung des der Magnetspur benachbarten Kartenkörpers behindert durch die erfindungsgemäße Ausbildung eine einwandfreie magnetische Lesung nicht.

Hiebei ist es von Vorteil, wenn beide Anpreßrollen angetrieben sind. Die Anpreßrollen können an einer gemeinsamen Achse befestigt sein, welche an ihren Enden beweglich gelagert und in Richtung zu den Magnetköpfen hin angepreßt ist.

Bevorzugt ist der Lese-Kennzeichnungseinrichtung eine Wendestation für den Datenträger nachgeordnet, mittels welcher die Lage der Ober- und Unterseite umkehrbar ist. Damit kann der Datenträger in beliebiger Lage eingeführt werden.

Weiters ist von Vorteil, wenn eine Präge- bzw. Stanzeinrichtung angeordnet ist, mittels welcher der Datenträger bleibend verformbar ist. Damit können visuell lesbare Kennzeichnungen zusätzlich abgesichert werden. Selbst bei einem nachträglichen Abkratzen der Beschriftung ist durch die bleibende Verformung sichergestellt, daß ein etwaiger Abbuchvorgang bzw. eine Benützung nachgewiesen werden kann.

Hängt ein derartiger Datenträger an einer Schnur, die an einem Kleidungsstück sichtbar befestigt ist, beispielsweise in der Verwendung als Skipaß usw., so sieht eine weitere Ausführung vor, daß der Datenträger durch ein Mundstück hindurch einziehbar ist, das eine Einrichtung zum Lösen eines Befestigungsklips vom Datenträger aufweist.

Dadurch ist ein einfaches Handling sichergestellt, die Karte vor Verlust geschützt und trotzdem ein vollständiges Einziehen des Datenträgers in eine Kontrollvorrichtung möglich.

Vorteilhaft weist die Einrichtung zum Lösen des Befestigungsklips einen elektromotorisch bzw. magnetisch betätigbaren Stößel auf, mittels welchem eine Raste des Befestigungsklips vom Datenträger lösbar ist.

Ein erfindungsgemäßer Datenträger mit einer Magnetschicht, auf der einen Seite und einer visuell lesbaren Kennzeichnungsschicht auf der anderen Seite ist dadurch gekennzeichnet, daß die Magnetschicht in Form von zwei parallel zu einem Rand des kartenförmigen Datenträgers und außerhalb dessen Symmetrieachse verlaufenden Magnetstreifen ausgebildet ist, und die Kennzeichnungsschicht durch eine für flüssige Tinte saugfähige Beschichtung gebildet ist.

Um die Beständigkeit der Beschriftung eines Tintenstrahldruckers zu verbessern, kann weiters vorgesehen sein, daß die Beschichtung einen Entwickler für ein in der Tinte enthaltenes Farbstoffvorprodukt enthält.

Durch diese Maßnahme ergibt sich der zusätzliche Vorteil, daß die Beschriftung des Druckträgers mit beliebigen Tintenstrahldruckern nicht möglich bzw. erkennbar ist. Damit ist eine Manipulation bzw. Ergänzung der Beschriftung erkennbar.

Als Farbstoffvorprodukt ist vorteilhaft eine Eisen-III-Verbindung vorgesehen, während der Entwickler eine saure Komponente enthält. Dadurch können dokumentenechte Beschriftungen erzielt werden.

Es sind aber auch andere Farbstoffe bzw. deren Vorprodukte einsetzbar. Beispielsweise können solche auf der Basis von Diazo-Verbindungen verwendet werden.

Um die Fälschungssicherheit weiter zu verbessern, ist bevorzugt vorgesehen, daß zumindest ein Magnetstreifen zumindest zwei übereinanderliegende Filme mit im wesentlichen identischen magnetischen Eigenschaften umfaßt, und daß an zumindest einem Film als physische Echtheitsmerkmale auswertbare Unterbrechungen vorgesehen sind. Die Unterbrechungen können beispielsweise durch magnetisch inaktive Pigmente bzw. Körper gebildet sein bzw. Dickenschwankungen bilden. In jedem Fall ist es günstig, wenn die Magnetschichte von einem gefärbten Film abgedeckt ist.

Die Erfindung wird nachfolgend anhand eines Anwendungsbeispieles in einem System zur Kontrolle und Kennzeichnung von Wertkarten erläutert. Die Erfindung kann auch in beliebigen anderen Systemen, beispielsweise bei der Zutrittskontrolle, bei der Warenerfassung, etc. angewendet werden, wie auch einzelne Komponenten des Systems geändert werden können.

Es zeigen:
Die Fig. 1 die Draufsicht auf einen als Wertkarte ausgebildeten Datenträger mit einem Befestigungsklips,
   (weiter wie auf Seite 9 der ursprünglichen Beschreibung)
die Figur 2 einen Querschnitt durch diese Karte beim Einführen in das Mundstück einer Vorrichtung zum Lesen und Kennzeichnen der Karte,
die Figur 3 einen Querschnitt eines weiteren Ausführungsbeispieles für einen Befestigungsklip im geschlossenen Zustand,
die Figur 4 diesen Befestigungsklip im geöffneten Zustand,
die Figur 5 eine weitere Variante eines Befestigungsklips für eine Wertkarte,
die Figuren 6 bis 8 den Aufbau der Wertkarte,
die Figur 9 ein Ausführungsbeispiel einer Wertkarte mit einer Klebelasche zur Befestigung eines Fotos,
die Figur 10 den Schichtenaufbau der Klebelasche,
die Figur 11 einen schematischen Querschnitt der Vorrichtung zum Lesen und Kennzeichnen der Wertkarte,
die Figur 12 ein Detail eines Tintenstrahldruckers,
die Figur 13 eine Draufsicht auf diese Vorrichtung,
die Figur 14 einen Querschnitt dieser Vorrichtung im Bereich einer magnetischen Lese- bzw. Schreibeinheit,
die Figur 15 das Schema einer Wendestation für dier Wertkarte, und die
Figur 16 die Komponenten eines Systems zur Kennzeichnung und Lesung bzw. Entwertung einer Wertkarte.

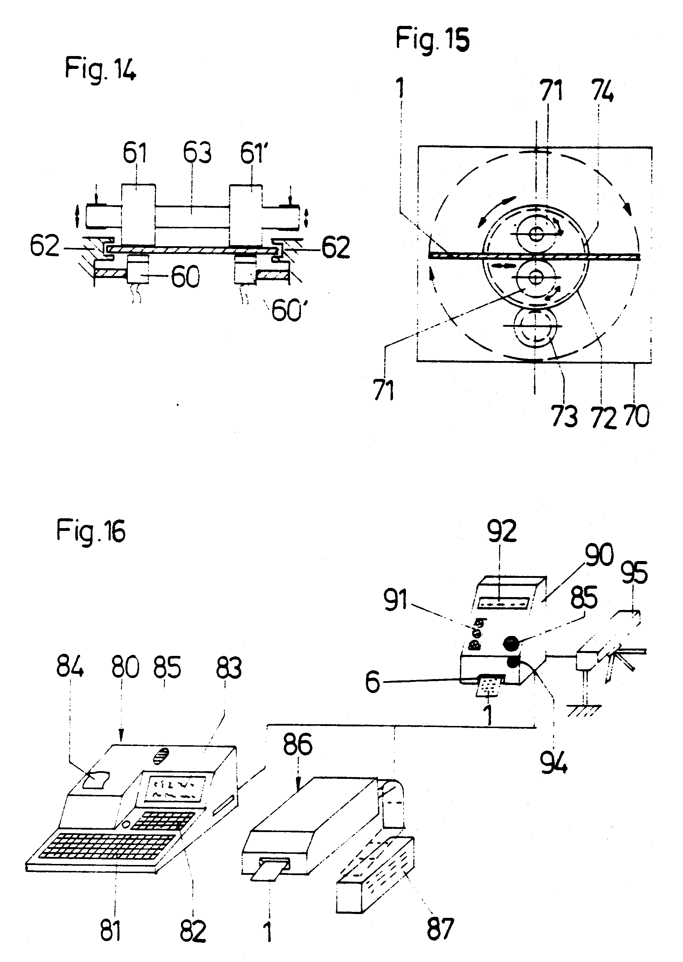

Wie in der Figur 16 dargestellt ist, werden die als Wertkarten ausgebildeten Datenträger 1 mittels eines Ausgabegerätes 86 ausgestellt. Dieses Gerät zieht die Karten von einem Kartenvorrat 87 ein, beschriftet sie visuell lesbar und schreibt die Stamminformation, beispielsweise den Wert der Karte, die Anzahl der erlaubten Zutritte etc. maschinenlesbar in einem Magnetstreifen ein. Anschließend werden die Karten ausgeworfen. Dieses Kartenausstellgerät 86 wird über einen Ausgaberechner 80 gesteuert. Der Ausgaberechner 80 weist eine alphanumerische Tastatur 81 und eine Funktionstastatur 82 auf. Über diese Tasten können die gewünschten Stamminformationen eingegeben werden. Die Eingaben und die jeweiligen Operationen werden über ein Display 83 angezeigt. Weiters enthält der Ausgaberechner 80 einen Bon- und einen Journalstreifendrucker 84. Zur Kontrolle bzw. Entwertung der Datenträger 1 ist an den jeweiligen Stellen eine Kartenkontrollvorrichtung 90 vorgesehen. Diese Kartenkontrollvorrichtung 90 weist ein Mundstück 6 zum Einführen des Datenträgers 1 auf. Nach dem Einführen des Datenträgers 1 wird die Stamminformation derselben magnetisch gelesen und abhängig vom jeweiligen Typ der Karte bzw. der jeweiligen Berechtigung, beispielsweise ein Drehkreuz 95 freigegeben. Zugleich wird die Karte entwertet, die konsumierte Leistung visuell lesbar aufgedruckt und wieder ausgegeben. Zur Kommunikation mit dem Karteninhaber weist die Kartenkontrollvorrichtung 90 noch eine Ampel 91 sowie ein Display 92 auf. Über letzteres können beispielsweise Informationen bei Fehlbedienungen etc. gegeben werden.

Weiters sind die Kartenkontrollvorrichtung 90 und der Ausgaberechner 80 über eine Wechselsprechanlage 85 miteinander verbunden. Bei etwaigen Problemen kann der Kartenbenützer eine Ruftaste 94 drücken und so mit der Bedienungsperson in Kontakt treten. Die einzelnen Komponenten, insbesondere der Ausgaberechner 80 und die Kartenkontrollvorrichtung 90 können direkt miteinander elektrisch verbunden sein, es ist aber auch eine Funktion ohne direkte Verbindung möglich. Die hier dargestellte Anordnung ist lediglich ein einfaches Beispiel. In der Regel sind in einem derartigen System eine Vielzahl von Kartenkontrollvorrichtungen und mehrere Ausgabestellen vorhanden.

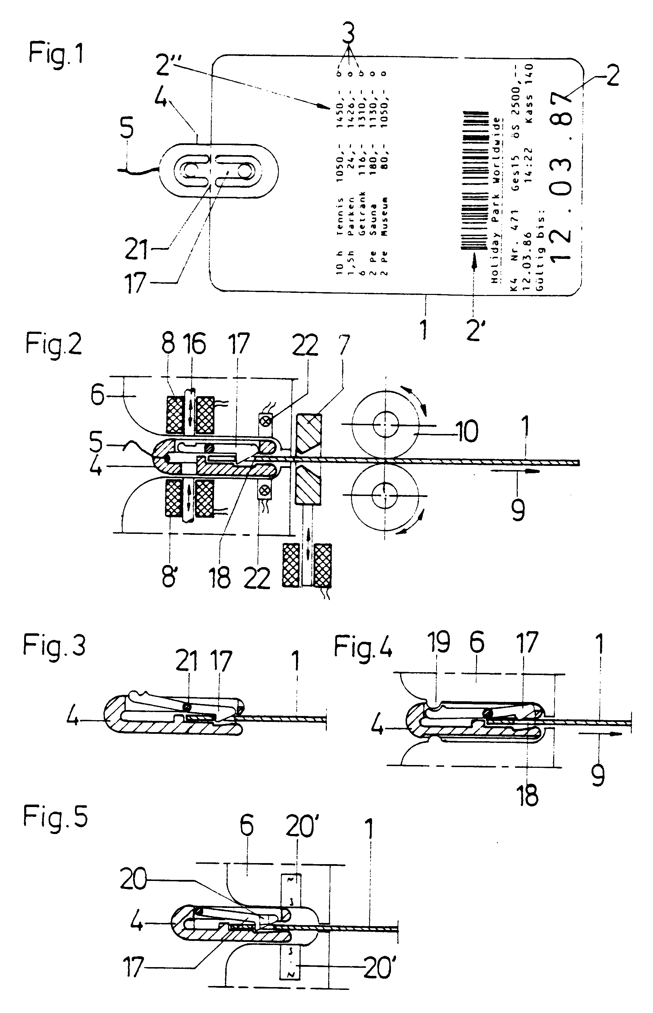

Die Figur 1 zeigt die Draufsicht auf eine Seite des als Wertkarte ausgebildeten Datenträgers 1. Diese Seite weist eine visuell lesbare Kennzeichnung 2 auf, in welcher die Stamminformationen enthalten sind. Diese Stamminformationen sind beispielsweise das Ablaufdatum der Berechtigungskarte, der Wert, Ausgabezeit, etc. Weiters sind diese Daten auch in Form eines visuell lesbaren Strichcodes 2' abgelegt. Bei der Benützung der Wertkarte werden die konsumierten Leistungen in der Kartenkontrollvorrichtung 90 visuell lesbar aufgedruckt. Dies ist in den Textzeilen 2'' dargestellt. Weiters wird jede Textzeile durch eine Prägung 3 zusätzlich gekennzeichnet. Dies hat den Vorteil, daß bei etwaigen Manipulationen der visuell lesbaren Kennzeichnung die Anzahl der Abbuchvorgänge einwandfrei nachgewiesen werden kann.

Der Datenträger 1 ist über einen Befestigungsklips 4 mit einer Schnur verbunden, welche wiederum beispielsweise an einem Kleidungsstück des Karteninhabers befestigt sein kann. Von Vorteil ist hier insbesondere, wenn die Schnur 5 in eine automatische Aufwickelvorrichtung mündet, sodaß die Karte im Normalfall sichtbar und direkt am Körper getragen wird. Bei der Benützung kann die Schnur 5 dann aus der nicht dargestellten Aufwickelvorrichtung ausgezogen werden und die Karte so in das Mundstück 6 der Kartenkontrollvorrichtung 90 eingeführt werden. Die Figur 2 zeigt diesen Vorgang schematisch im Querschnitt, wobei nur einige Elemente der Kartenkontrollvorrichtung 90 dargestellt sind.
Der Befestigungsklips 4 besteht aus einem U-förmigen Kunststoffteil, in welchem eine Raste 17 federnd vorgespannt gelagert ist. Die Raste 17 ist hier einstückig mit dem Kunststoffteil in einer Ausnehmung desselben ausgebildet, wobei die Verbindungsstege 21 als Torsionsfeder wirken. Die Raste 17 greift in ihrer Ruhestellung in eine Öse 18 des Datenträgers 1. Beim Einführen der Karte in das Mundstück 6 der Kartenkontrollvorrichtung 90 erkennen im Einführschlitz angeordnete Lichtschranken 22 das Einführen der Karte. Dadurch wird ein Verschlußschieber 7 für den Einführschlitz des Mundstückes geöffnet. Die Einzugswalzen 10 eines Transportmechanismus fassen die Karte und ziehen sie in Richtung des Pfeiles 9. Nach dem Auflaufendes Befestigungsklips 4 im Mundstück 6 wird eine Einrichtung zum Lösen des Befestigungsklips vom Datenträger 1 betätigt. Diese Einrichtung besteht in dem in Figur 2 dargestellten Beispiel aus jeweils einem oberhalb und unterhalb der Kartenebene angeordneten Stößel 16, welcher mittels eines Elektromagneten 8 betätigbar ist. Durch Bewegen des Stößels 16 zur Kartenebene hin, wird die Raste 17 angehoben und gibt die Karte frei. Zugleich wird der Befestigungsklips fixiert, um ihn gegen unbeabsichtigtes Ausziehen aus dem Mundstück 6 zu sichern. Nach dem Lesen, Kennzeichnen und gegebenenfalls Entwerten der Karte wird diese vom Transportmechanismus bzw. den -walzen 10 wieder entgegen der Richtung des Pfeiles 9 in den Befestigungsklips 4 eingeführt. Anschließend werden die Stößel 16 zurückgezogen und die Karte kann wieder ausgeworfen werden.

Es ist leicht ersichtlich, daß durch eine derartige Einrichtung die Bedienung einer Kartenkontrollvorrichtung wesentlich vereinfacht wird.

Die Figuren 3 und 4 zeigene eine Variante eines Befestigungsklips. Die Figur 3 zeigt hiebei den Befestigungsklips in Ruhestellung. Die Raste 17 ist an einem Arm eines Hebels ausgebildet. Der zweite Arm des Hebels verläuft in spitzem Winkel zur Ebene des Datenträgers 1. Beim Einführung der Wertkarte in das Mundstück 6 läuft dieser zweite Arm auf einer Nocke 19 auf, wodurch der Hebel um die als Achse ausgebildete Torsionsfeder 21 gedreht wird. Dadurch löst sich die Raste 17 aus der Öse 18 der Karte und gibt diese frei. Beim Auswerfen der Karte 1 aus dem Mundstück 6 nimmt diese den Befestigungsklip wieder mit, wodurch der Hebel in seine Ruhestellung schwingt und die Raste 17 in die Öse 18 der Karte eingreift.

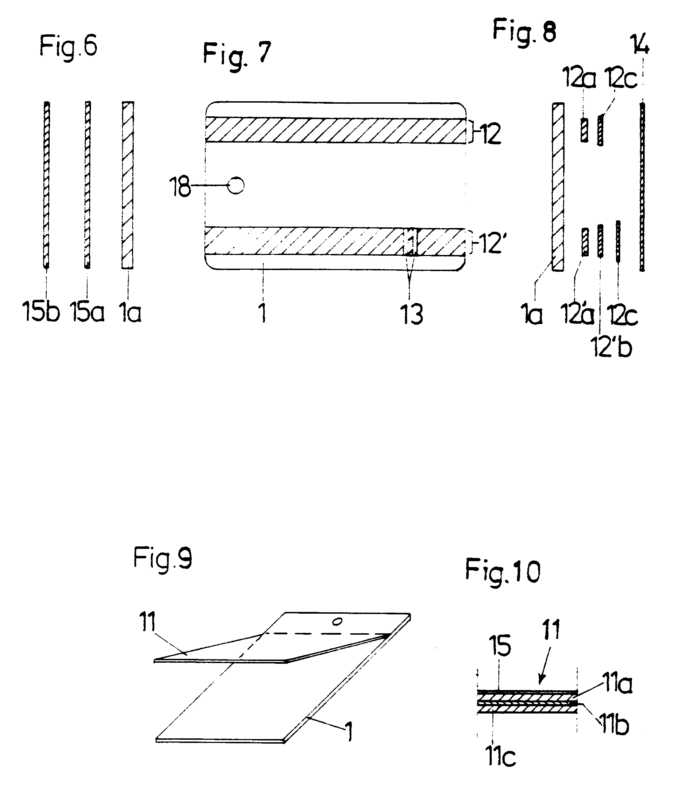

Die Figur 5 zeigt ein weiteres Beispiel eines Befestigungsklip 4 kurz vor dem Einführung in das Mundstück 6. Bei diesem Beispiel ist in die Raste 17 ein Dauermagnet 20 eingelassen. Im Mundstück wiederum befinden sich zu beiden Ebenen des Datenträgers 1 Magneten 20', welche bei gänzlich eingeschobenem Befestigungsklips 4 die Raste 17 magnetisch anheben, sodaß der Datenträger 1 freigegeben wird.

Die hier dargestellten Beispiele ermöglichen eine Lösung des Befestigungsklips 4 unabhängig davon, in welcher Lage der Datenträger 1 in das Mundstück 6 eingeführt wird. Es ist selbstverständlich auch möglich, den Befestigungsklips 4 und die Einrichtung zum Öffenen desselben im Mundstück so auszubilden, daß sich der Klips nur in einer bestimmten Lage öffnet. Dies ist beispielsweise dann von Vorteil, wenn die Kartenkontrollvorrichtung eine bestimmte Einschublage der Wertkarte erfordert. Fur einen solchen Fall ist es weiters möglich, den Befestigungsklips 4 und die Karte so korrespondierend auszubilden, daß beide Elemente nur in einer bestimmten Lage miteinander verbindbar sind.

Die Figur 7 zeigt die der visuellen Kennzeichnung gegenüberliegende Seite des Datenträgers 1 und die Figuren 6 und 8 den Aufbau der beiden Seiten der Karte im schematischen Querschnitt. Der Datenträger 1 besteht aus einem Grundkörper 1a, der auf einer Seite mit einer saugfähigen Beschichtung 15 versehen ist. Als Grundkörper 1a eignen sich insbesondere Karton oder, wenn die Karte erhöhten Beanspruchungen ausgesetzt ist, Kunststoff bzw. Verbundmaterialien. Besteht der Kartengrundkörper aus Kunststoff, so ist es von Vorteil, wenn gemäß Fig. 6 die saugfähige Beschichtung 15 aus zwei Filmen 15a und 15b hergestellt ist. Der Film 15a dient dann insbesondere der Haftvermittlung, während der Film 15b auf gute Saugfähigkeit abgestellt sein kann.

Entsprechend Fig. 8 befindet sich auf der zweiten Seite des Grundkörpers 1a Magnetstreifen 12, der aus einer Magnetschicht 12a besteht, welche von einer beispielsweise weiß eingefärbten Abdeckschicht 12c überdeckt ist. Die gesamte Kartenoberfläche kann beispielsweise von einem Schutzlack 14 überdeckt sein. Der Magnetstreifen 12 dient der Aufnahme einer maschinenlesbaren Kennzeichnung bzw. Codierung in bekannter Weise. Wenn die Menge der im Streifen 12 speicherbaren Daten nicht ausreicht, kann gegebenenfalls ein zweiter Magnetstreifen 12' vorgesehen sein.

An diesem zweiten Magnetstreifen 12' wird nachfolgend ein Beispiel zur Fälschungssicherung der Wertkarte erläutert. Selbstverständlich können die hier dargestellten Maßnahmen zur Fälschungssicherung an einem einzigen, zur Aufnahme der Daten bestimmten Magnetstreifen ausgebildet sein. Der Magnetstreifen 12' besteht aus einem ersten Film 12'a, welcher Unterbrechungen 13 aufweist. Dieser erste Film 12'a ist dann ganzflächig, also auch im Bereich der Unterbrechungen 13
von der eingefärbten Abdeckschicht 12c überdeckt. In der gezeigten Ausführung ist der unterbrochene Film 12'a von einem zweiten Film 12'b mit einer Magnetschicht überdeckt. Auf dem zweiten Film 12'b ist wiederum eine inaktive Abdeckschicht 12c aufgebracht. Der so ausgebildete Magnetstreifen 12' weist dadurch im Bereich der Unterbrechungen 13 Inhomogenitäten in Form von Dickenschwankungen auf. Diese Inhomogenitäten sind visuell nicht sichtbar.

Die Inhomogenitäten können aber auch auf andere Weise, beispielsweise durch Beimischung von magnetisch inaktiven Körpern oder Pigmenten in die Magnetschicht erzeugt werden.
Wird nun dieser Magnetstreifen 12' mit einem magnetischen Gleichfeld beaufschlagt und anschließend gelesen, so induzieren die durch die Unterbrechungen 13 bedingten Inhomogenitäten durch eine Änderung des magnetischen Flusses ein elektrisches Signal im Lesekopf, welches als Echtheitsmerkmal ausgewertet werden kann. Hiebei können beispielsweise die Anzahl der elektrischen Impulse und die Lage derselben relativ zu einem Fixpunkt der Karte ausgewertet werden. Auf diese Art erhält man ein physisches Echtheitsmerkmal der Karte, da beispielsweise die Anzahl und die Lage der Unterbrechungen 13 auf jeder Wertkarte individuell angeordnet werden können. Der Magnetstreifen 12' kann dabei aber ganz normal zur Datenspeicherung verwendet werden. Dieses Verfahren ist nicht auf das hier dargestellte Beispiel eingeschränkt. Wesentlich ist nur, daß nach der Beaufschlagung der Magnetschicht mit einem Gleichfeld bei der Lesung durch Inhomogenitäten bedingte, charakteristische Signale entstehen. Ein wesentlicher Vorteil ist auch, daß für die Echtheitserkennung keine gesonderten Vorrichtungen notwendig sind, und daß die Auswertung auch bei Verschmutzung der Karte oder Verschleiß einwandfrei möglich ist. Die Auswertung kann auch durch Aufbringen eines magnetischen Wechselfeldes erfolgen, wobei dann durch die Inhomogenitäten Signaländerungen entstehen.

In Fig. 9 und 10 ist noch eine Variante des Datenträgers 1 dargestellt, welche beispielsweise durch Aufnahme eines Fotoes einer bestimmten Person zugeordnet werden kann. Hiezu weist die Karte auf einer Seite eine Klebelasche 11 auf, welche nur in einem Teilbereich der Oberfläche mit dem Grundkörper 1a verbunden ist. Die Klebelasche 11 besteht gemäß Fig. 10 aus einer silikonisierten Abdeckfolie 11c, einem Klebstoffpolster 11b, einer transparenten Folie 11a und der außenliegenden, transparenten und saugfähigen Beschichtung 15. Zum Befestigen eines Fotos kann die Abdeckfolie 11c entfernt, das Foto eingelegt und die Klebelasche gegen den Grundkörper 1a gedrückt werden. Die Beschriftung ist auf der saugfähigen Beschichtung 15 sowohl vor als auch nach dem Einlegen des Fotos möglich.

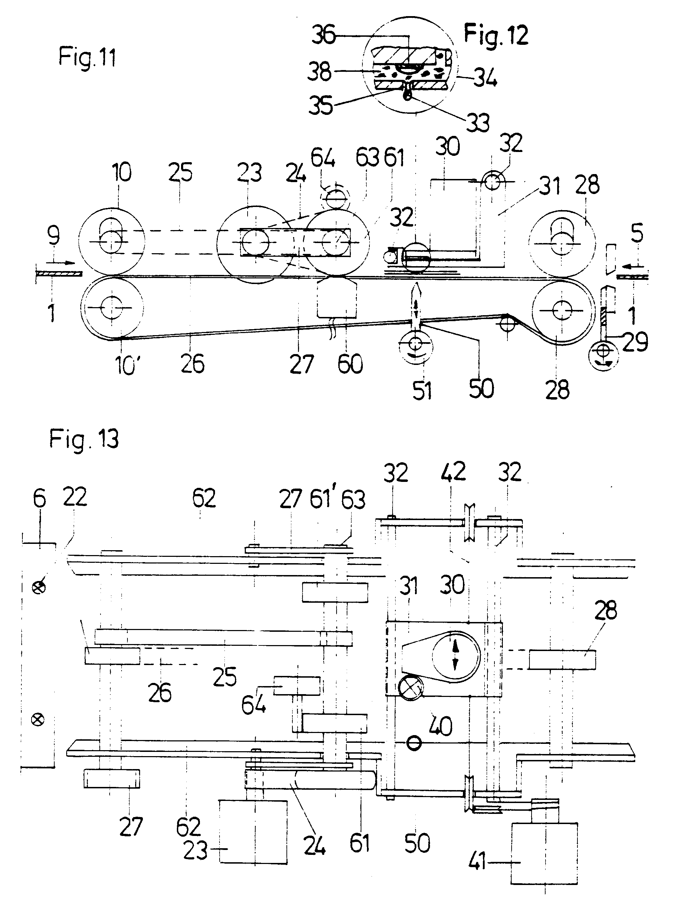

Die Figur 11 zeigt den schematischen Querschnitt und die Figur 13 die Draufsicht auf eine Vorrichtung zum Lesen und Kennzeichnen von Datenträgern 1, wie sie beispielsweise im Kartenausstellgerät 86 Verwendung finden. Diese Vorrichtung weist einen Transportmechanismus zur Bewegung der Karten auf. der Transportmechanismus besteht aus einem durchgehenden Riemen 26, welcher an zwei Walzen 10' und 28 gelagert ist. Die Walze 10' ist über Zahnräder mit einer Gegendruckwalze 10 gekoppelt, welche wiederum über einen Riemen 25 von einer Achse 63 angetrieben wird. Die Achse 63 ist über einen Riemen 24 mit einem Motor 23 verbunden. Wird nun beispielsweise eine nicht eingezeichnete Wertkarte in Richtung des Pfeiles 55 zugeführt, so wird diese von den beiden Rollen 28 erfaßt und auf dem Riemen 26 aufliegend in eine erste Station zur optischen bzw. visuell lesbaren Kennzeichnung geführt, anschließend durch eine Station zur magnetischen Codierung bewegt und schließlich über die Walzen 10 und 10' ausgeworfen. Werden die Karten hiebei endlos zugeführt, so können sie mittels einer Schneidvorrichtung 29 in einzelne Karten getrennt werden.

Dieselbe Vorrichtung kann auch in der Kartenkontrollvorrichtung 90 verwendet werden. Dann werden die Karten in der Regel in Richtung des Pfeiles 9 eingeführt. Es ist jedoch nicht wesentlich, in welcher Richtung die Karten zugeführt werden. Es ist leicht ersichtlich, daß der Transportmechanismus die Karten in beliebiger Richtung einziehen und auswerfen kann. Während der Bewegung der Wertkarten werden diese in einem aus zwei Führungsschienen 62 gebildeten Kanal geführt. Zur magnetischen Codierung bzw. zur Lesung von Magnetkarten sind auf der Achse 63 zwei Anpreßrollen 61 symmetrisch zur Mittelachse des Kanals angeordnet. Die Achse 63 ist, wie auch in der Figur 14 dargestellt, an ihren Enden in einer Schwinge 27 beweglich gelagert. Die Schwinge 27 ist um die Mittelachse des Motors 23 drehbar. Die Anpreßrollen drücken die Karte gegen starr befestigte, korrespondierend angeordnete magnetische Lese- bzw. Schreibköpfe 60. Die Bewegungsgeschwindigkeit des Datenträgers 1 wird mittels eines Impulsgebers 64 an einer der Anpreßrollen 61 gemessen. Damit können nun Datenträger 1, deren Magnetstreifen parallel zu einem Kartenrand und außerhalb der Symmetrieachse der Karten verläuft, magnetisch gelesen und beschrieben werden, unabhängig davon, ob die Karte in ihrer Ebene verdreht ist.

Wird diese Vorrichtung zur Kartenkontrolle und nicht zu deren Ausstellung verwendet, so kommt es häufig vor, daß die Datenträger 1 verkehrt, d.h., mit der Magnetschicht zu den Anpreßrollen hingerichtet, eingeführt werden. Um solche Karten auch dann einwandfrei lesen zu können, ist der beschriebenen Vorrichtung eine Wendestation 70 nachgeordnet, welche in der Figur 15 schematisch dargestellt ist. Diese Wendestation 70 besteht aus zwei Einzugswalzen 71 für den Datenträger 1, welche Walzen in einem drehbaren Lager 74 aufgenommen sind. Dieses Lager 74 kann mittels eines Ritzels 73 um 180° gedreht werden. Dadurch können die beiden Kartenseiten vertauscht werden. Wird nun beispielsweise eine Karte 1 verkehrt eingeführt, so durchläuft sie den Transportmechanismus der Vorrichtung zum Lesen und Kennzeichnen und gelangt in die Wendestation 70. Hier werden die Kartenseiten vertauscht und die Karte wird wieder in den Transportmechanismus eingeführt. Dann kann die magnetische Lesung bzw. Kennzeichnung erfolgen.

Innerhalb des Transportmechanismus ist eine Station zum visuellen bzw. optisch lesbaren Kennzeichnen der Datenträger 1 angeordnet. Diese Station weist einen Schlitten 31 auf, welcher quer zur Bewegungsrichtung der Karten verfahrbar ist. Der Schlitten 31 ist hiezu an Führungsschienen 32 gelagert und mittels eines Seilzuges 42 und eines Motors 41 verfahrbar.

Ein in dem Schlitten 31 befestigter Tintenstrahldrucker 30 beschriftet die saugfähige Beschichtung 15 der Karten in visuell bzw. optisch lesbarer Form.

Auf dem Schlitten 31 ist ein optischer Lesekopf 40 montiert, welcher gemeinsam mit dem Tintenstrahldrucker 30 verfahrbar ist. Dadurch kann festgestellt werden, ob der Tintenstrahldrucker einwandfrei arbeitet, d.h. ob die Beschriftung lesbar ist. Wenn der optische Lesekopf als Strichcodleser ausgebildet ist, können auch maschinell lesbare Informationen in Form eines Strichcodes aufgebracht und ausgewertet werden.

Weiters befindet sich in derselben Ebene eine Prägeeinrichtung, welche aus einem Stößel 50 und einem Exzenter 51 besteht. Mit Hilfe dieser Prägeeinrichtung können auf der Karte 1 angebrachte Beschriftungszeilen durch eine Prägung bzw. bleibende Verformung des Datenträgers 1 gekennzeichnet werden. Damit werden etwaige Manipulationen unterbunden, weil auch nach dem vollständigen Beseitigen der visuell lesbaren Kennzeichnung noch erkennbar ist, daß auf der Karte eine Wertänderung durchgeführt wurde.

In der Figur 12 ist eine Düse 34 des Tintenstrahldruckers 30 vergrößert dargestellt, um die Funktionsweise näher zu erläutern. Diese Düse besteht aus einer Düsenöffnung 35, einem Tintenkanal 38 und einem hinter der Düsenöffnung liegenden Heizelement 36. Durch kurzzeitige Erhitzung dieses Heizelementes 36 bildet sich in der Tinte eine Dampfblase, welche durch die Düsenöffnung 35 einen Tropfen 33 der Tinte schleudert. Dieser Tropfen trifft dann auf die saugfähige Beschichtung 15 der Karte. Durch entsprechende Ansteuerung und Bewegung des Tintenstrahldruckers 30 werden Zeichen bzw. Schriften in der Art eines Matrixdruckers gebildet.

Die Tinte einerseits und die Beschichtung 15 auf dem Datenträger 1 andererseits enthalten ein Farbstoffvorprodukt und einen Entwickler. Bei Auftreten der Tinte auf der Oberflächenbeschichtung kommen das Farbstoffvorprodukt und der Entwickler in Kontakt, sodaß durch Reaktion dieser beiden Komponenten eine Farbbildung entsteht.

Es ist von Vorteil, wenn die Beschichtung 15 auf dem Datenträger 1 den Entwickler enthält, und die Tinte das Farbstoffvorprodukt. Als Farbstoffvorprodukt eignet sich beispielsweise eine Eisen-III-verbindung, während der Entwickler eine saure Komponente enthalten kann.

Beispielsweise werden hiezu Gallussäure oder eine phenolische Verbindung verwendet.

Selbstverständlich können der Tinte auch andere, bereits entwickelte Farbstoffe oder Farbstoffe in Form von Pigmenten beigemischt sein.

Durch diese Ausbildung wird sichergestellt, daß eine Beschriftung der Wertkarte durch beliebige Farbstoffe erkennbar ist, weil die in der Tinte und die in der Beschichtung enthaltenen Komponenten Farben mit charakteristischen Absorptionseigenschaften bilden. Für die Oberflächenbeschichtung eignen sich beispielsweise als Bindemittel Polyvinylalkohol, als Pigment Kieselsäure und als Entwickler Phenolharze, saure Tone, Kaolin oder dergleichen.

Es ist leicht ersichtlich, daß das vorstehend beschriebene System lediglich einen konkreten Anwendungsfall der Erfindung erläutert. Die Erfindung ist jedoch nich darauf eingeschränkt, sondern es können einzelne Komponenten des Systems oder Anwendungen in vielfacher Art variiert werden.

## Patentansprüche

1. Vorrichtung zum Lesen und Kennzeichnen von bedruckbaren, kartenförmigen Datenträgern, die eine Magnetschicht aufweisen, mit einem Transportmechanismus zur linearen Bewegung des Datenträgers (1) in einem zwei Flachseiten aufweisenden Kanal (62), mit einer dem Kanal (62) zugeordneten magnetischen Lese-Kennzeichnungseinrichtung zum Lesen und Beschreiben der Magnetschicht und mit einem Drucker zur visuell lesbaren Kennzeichnung des Datenträgers, dadurch gekennzeichnet, daß als magnetische Lese-Kennzeichnungseinrichtung zumindest ein außermittig angeordneter Lese-Schreibkopf (60) an einer Flachseite des Kanals (62), und als Drucker ein quer zur Bewegungsrichtung des Datenträgers (1) verfahrbarer Tintenstrahldrucker (30) an der gegenüberliegenden zweiten Flachseite des Kanals (62) vorgesehen ist.

2. Vorrichtung nach Anspruch 1, dadurch gekennzeichnet, daß gemeinsam mit dem Tintenstrahldrucker (30) ein optischer Lesekopf (40) verfahrbar ist.

3. Vorrichtung nach Anspruch 2, dadurch gekennzeichnet, daß der Tintenstrahldrucker (30) und der optische Lesekopf (40) auf einem gemeinsamen Schlitten (31) befestigt sind, welcher motorisch entlang von Führungsschienen (32) verfahrbar ist.

4. Vorrichtung nach Anspruch 2 oder 3, dadurch gekennzeichnet, daß der optische Lesekopf (40) ein Strichcodeleser ist.

5. Vorrichtung nach einem der Ansprüche 1 bis 4, dadurch gekennzeichnet, daß die Lese-Kennzeichnungseinrichtung, jeweils längssymmetrisch, zwei starr befestigte Lese-Schreibköpfe (60, 60') und zwei gegenüberliegende, beweglich gelagerte bzw. elastische Anpreßrollen (61, 61') aufweist.

6. Vorrichtung nach Anspruch 5, dadurch gekennzeichnet, daß beide Anpreßrollen (61, 61') angetrieben sind.

7. Vorrichtung nach Anspruch 5 oder 6, dadurch gekennzeichnet, daß beide Anpreßrollen (61, 61') auf einer gemeinsamen Achse (63) sitzen, welche mittels einer Schwinge beweglich gelagert ist.

8. Vorrichtung nach einem der Ansprüche 5 bis 7, dadurch gekennzeichnet, daß der Lese-Kennzeichnungseinrichtung eine Wendestation (70) für den Datenträger (1) nachgeordnet ist, mittels welcher die Lage der Ober- und Unterseite des Datenträgers (1) umkehrbar ist.

9. Vorrichtung nach einem der Ansprüche 1 bis 8, dadurch gekennzeichnet, daß in dem Kanal (62) eine Präge- bzw. Stanzeinrichtung (57) zur bleibenden Verformung des Datenträgers (1) angeordnet ist.

10. Vorrichtung nach einem der Ansprüche 1 bis 9, dadurch gekennzeichnet, daß der Datenträger (1) durch ein Mundstück (6) hindurch einziehbar ist, das eine Einrichtung (8) zum Lösen eines Befestigungsklips (4) vom Datenträger (1) aufweist.

11. Vorrichtung nach Anspruch 10, dadurch gekennzeichnet, daß die Einrichtung (8) einen elektromotorisch oder -magnetisch betätigbaren Stößel (16) aufweist, mittels welchem eine Raste (17) des Befestigungsklips (4) vom Datenträger (1) lösbar ist.

12. Datenträger, insbesondere Fahrkarte, Berechtigungskarte, oder dergleichen, mit einer Magnetschicht auf der einen Seite und einer visuell lesbaren Kennzeichnungsschicht auf der anderen Seite, dadurch gekennzeichnet, daß die Magnetschicht in Form von Zwei parallel zu einem Rand des kartenförmigen Datenträgers (1) und außerhalb dessen Symmetrieachse verlaufenden Magnetstreifen (12, 12') ausgebildet ist und die Kennzeichnungsschicht durch eine für flüssige Tinte saugfähige Beschichtung (15) gebildet ist.

13. Datenträger nach Anspruch 12, dadurch gekennzeichnet, daß die saugfähige Beschichtung (15) transparent und an der Oberfläche einer auf den Kartengrundkörper (1a) aufgeklebten, transparenten Klebefolie (11) aufgebracht ist.

14. Datenträger nach Anspruch 12 oder 13, dadurch gekennzeichnet, daß die Beschichtung (15) einen Entwickler für ein in der Tinte (33) enthaltenes Farbstoffvorprodukt enthält.

15. Datenträger nach Anspruch 12, dadurch gekennzeichnet, daß zumindest ein Magnetstreifen (12') zumindest zwei übereinanderliegende Filme (12'a, 12'b) mit im wesentlichen identischen magnetischen Eigenschaften umfaßt, und daß an zumindest einem Film (12'a) als physische Echtheitsmerkmale auswertbare Unterbrechungen (13) vorgesehen sind.

16. Datenträger nach Anspruch 19, dadurch gekennzeichnet, daß die Unterbrechungen durch magnetisch inaktive Pigmente bzw. Körper gebildet sind.

17. Datenträger nach Anspruch 15, dadurch gekennzeichnet, daß die Unterbrechungen (13) Dickenschwankungen des Magnetstreifens (12') bilden.

18. Datenträger nach einem der Ansprüche 15 bis 17, dadurch gekennzeichnet, daß der Magnetstreifen (12') von einem gefärbten Film (12c) abgedeckt ist.

## Claims

1. Apparatus for reading and marking data carriers in card form which can be printed upon and which have a magnetic layer, comprising a transport mechanism for linear movement of the data carrier (1) in a passage (62) having two flat sides, a magnetic reading-marking means associated with the passage (62) for reading and writing on the magnetic layer, and a printer for visually readable marking of the data carrier, characterised in that at least one reading-writing head (60) which is arranged at an off-centre position is provided as the magnetic reading-marking means at a flat side of the passage (62) and an ink jet printer (30) which is movable transversely to the direction of movement of the data carrier (1) is provided as the printer at the opposite second flat side of the passage (62).

2. Apparatus according to claim 1 characterised in that an optical reading head (40) is displaceable jointly with the ink jet printer (30).

3. Apparatus according to claim 2 characterised in that the ink jet printer (30) and the optical reading head (40) are fixed to a common carriage (31) which is displaceable by motor means along guide rails (32).

4. Apparatus according to claim 2 or claim 3 characterised in that the optical reading head (40) is a bar code reader.

5. Apparatus according to one of claims 1 to 4 characterised in that the reading-marking means comprises respectively in lengthwise symmetry two rigidly fixed reading-writing heads (60, 60') and two oppositely disposed movably mounted or elastic pressure rollers (61, 61').

6. Apparatus according to claim 5 characterised in that both pressure rollers (61, 61') are driven.

7. Apparatus according to claim 5 or claim 6 characterised in that both pressure rollers (61, 61') are carried on a common shaft (63) which is mounted movably by means of a rocking arm.

8. Apparatus according to one of claims 5 to 7 characterised in that arranged downstream of the reading-marking means is a turning station (70) for the data carrier (1), by means of which the positions of the top side and the underside of the data carrier (1) can be reversed.

9. Apparatus according to one of claims 1 to 8 characterised in that arranged in the passage (62) is an embossing or stamping means (57) for permanent deformation of the data carrier (1).

10. Apparatus according to one of claims 1 to 9 characterised in that the data carrier (1) can be drawn in through a mouthpiece (6) which has a means (8) for releasing a fixing clip (4) from the data carrier (1).

11. Apparatus according to claim 10 characterised in that the means (8) has a thrust member (16) which can be actuated by electric motor means or electromagnetic means and by means of which a detent (17) of the fixing clip (4) is releasable from the data carrier (1).

12. A data carrier, in particular a travel card, entitlement card or the like, having a magnetic layer on one side and a visually readable marking layer on the other side, characterised in that the magnetic layer is in the form of two magnetic strips (12, 12') which exend parallel to an edge of the data carrier (1) in card form and outside the axis of symmetry thereof and the marking layer is formed by a coating (15) which is absorbent for liquid ink.

13. A data carrier according to claim 12 characterised in that the absorbent coating (15) is transparent and is applied to the surface of a transparent adhesive foil (11) which is stuck on to the main body (1a) of the card.

14. A data carrier according to claim 12 or claim 13 characterised in that the coating (15) contains a developer for an initial dyestuff product contained in the ink (33).

15. A data carrier according to claim 12 characterised in that at least one magnetic strip (12') includes at least two superposed films (12'a, 12'b) with substantially identical magnetic properties, and that evaluatable interruptions (13) are provided at at least one film (12'a) as physical authenticity features.

16. A data carrier according to claim 15 characterised in that the interruptions are formed by magnetically inactive pigments or bodies.

17. A data carrier according to claim 15 characterised in that the interruptions (13) form fluctuations in thickness of the magnetic strip (12').

18. A data carrier according to one of claims 15 to 17 characterised in that the magnetic strip (12') is covered by a coloured film (12c).

## Revendications

1. Dispositif pour la lecture et l'identification de supports de données imprimables en forme de cartes qui présentent une couche magnétique, comprenant un mécanisme de transport pour le déplacement linéaire du support de données (1) dans un canal (62) présentant deux côtés plats, un dispositif magnétique de lecture et d'identification associé au canal (62) et destiné à la lecture et à la description de la couche magnétique et une imprimante destinée à l'identification visuellement lisible du support de données, **caractérisé** par le fait qu'il est prévu comme dispositif magnétique de lecture et d'identification au moins une tête de lecture/écriture (60) disposée excentriquement sur l'un des côtés plats du canal (62) et comme imprimante une imprimante à jet d'encre (30) qui se déplace transversalement à la direction de déplacement du support de données (1) et est disposée sur le côté plat opposé du canal (62).

2. Dispositif selon la revendication 1, **caractérisé** par le fait qu'une tête de lecture optique (40) peut être déplacée avec l'imprimante à jet d'encre (30).

3. Dispositif selon la revendication 2, **caractérisé** par le fait que l'imprimante à jet d'encre (30) et la tête de lecture optique (40) sont fixées sur un chariot (31) commun qui est déplacé par un moteur le long de rails de guidage (32).

4. Dispositif selon la revendication 2 ou 3, **caractérisé** par le fait que la tête de lecture optique (40) est un lecteur de code à barres.

5. Dispositif selon l'une des revendications 1 à 4, **caractérisé** par le fait que le dispositif de lecture et d'identification présente symétriquement sur la longueur deux têtes de lecture/écriture (60, 60') fixées rigidement et deux galets-presseurs (61, 61') disposés en face et montés mobiles ou élastiques.

6. Dispositif selon la revendication 5, **caractérisé** par le fait que les deux galets-presseurs 61, 61') sont entraînés.

7. Dispositif selon la revendication 5 ou 6, **caractérisé** par le fait que les deux galets-presseurs (61, 61') sont montés sur un axe (63) commun qui est monté mobile à l'aide d'une coulisse.

8. Dispositif selon l'une des revendications 5 à 7, **caractérisé** par le fait qu'une station de retournement (70) pour le support de données (1) est montée en aval du dispositif de lecture et d'identification, laquelle station permet de renverser la position de la face supérieure et de la face inférieure du support de données (1).

9. Dispositif selon l'une des revendications 1 à 8, **caractérisé** par le fait qu'un dispositif d'estampage et de poinçonnage (57) pour le façonnage permanent du support de données (1) est disposé dans le canal (62).

10. Dispositif selon l'une des revendications 1 à 9, **caractérisé** par le fait que le support de données (1) peut être introduit par un orifice (6) qui présente un dispositif (8) destiné à détacher un clip de fixation (4) du support de données (1).

11. Dispositif selon la revendication 10, **caractérisé** par le fait que le dispositif (8) présente un coulisseau (16) qui est actionné par un moteur électrique ou électromagnétiquement et permet de débloquer un cran d'arrêt (17) du clip de fixation (4) sur le support de données (1).

12. Support de données, en particulier titre de transport, carte d'habilitation, ou analogues, comportant une couche magnétique sur un côté et une couche d'identification visuellement lisible sur l'autre côté, **caractérisé** par le fait que la couche magnétique est réalisée sous la forme de deux bandes magnétiques (12, 12') s'étendant parallèlement à un bord du support de données (1) en forme de carte et à l'extérieur de l'axe de symétrie dudit support et que la couche d'identification est formée par un revêtement (15) absorbant l'encre liquide.

13. Support de données selon la revendication 12, **caractérisé** par le fait que le revêtement absorbant (15) est transparent et est appliqué sur la surface d'une feuille adhésive (11) transparente collée sur le corps de base (1a) de la carte.

14. Support de données selon la revendication 12 ou 13, **caractérisé** par le fait que le revêtement (15) contient un révélateur pour un produit colorant contenu dans l'encre (33).

15. Support de données selon la revendication 12, **caractérisé** par le fait qu'une bande magnétique (12') au moins contient au moins deux films (12'a, 12'b) superposés présentant des propriétés magnétiques sensiblement identiques et que des discontinuités (13) pouvant être interprétées en tant que caractéristiques physiques d'authenticité sont prévues sur au moins un film (12'a).

16. Support de données selon la revendication 19, **caractérisé** par le fait que les discontinuités sont formées par des pigments ou des corps inactifs magnétiquement.

17. Support de données selon la revendication 15, **caractérisé** par le fait que les discontinuités (13) forment des variations d'épaisseur de la bande magnétique (12').

18. Support de données selon l'une des revendications 15 à 17, **caractérisé** par le fait que la bande magnétique (12') est recouverte par un film (12c) teint.
